# EUROPEAN PATENT SPECIFICATION

(11) **EP 1 113 044 B1**
(45) Date of publication and mention of the grant of the patent: **02.08.2006**
(21) Application number: 00311695.1
(22) Date of filing: 27.12.2000
(51) Int. Cl.: C08L 7/00, C08L 9/00, C08K 3/36, B60C 1/00, C08K 3/22

(54) **Rubber cement for marking unvulcanized rubber and rubber article marked with the same**
Kautschuklösung zur Markierung eines unvulkanisierten Kautschuks und markierter Gummi-Artikel
Solution de caoutchouc pour marquage de caoutchouc non vulcanisé et article en caoutchouc marqué par cette solution

(30) Priority: 28.12.1999 JP 37727399
(43) Date of publication of application: 04.07.2001
(73) Proprietor: Bridgestone Corporation, Tokyo (JP)
(72) Inventor: Kanoh, Motoaki, Kodaira-shi, Tokyo (JP); Makino, Yoshihiro, Kodaira-shi, Tokyo (JP)
(74) Representative: Whalley, Kevin

(56) References cited:
- EP-A- 0 376 357
- US-A- 2 560 195
- US-A- 3 101 110

## Description

The present invention relates to a rubber cement for marking which improves accuracy of the position of placement of rubber members in a process for manufacturing a rubber article such as a tire and a belt and provides enhanced quality control of the rubber articles, and more particularly to a rubber article marked with the rubber cement.

Using a tire as an example of a rubber article, marking a rubber member in a process for manufacturing a tire will be described. In a process for manufacturing a tire, it is generally practiced that marking lines and/or characters are placed on an extruded tread rubber by applying a coloured rubber cement immediately after extrusion of the tread rubber in order to identify the rubber member. However, placing marking lines, characters and/or bar codes directly on the surface of an unvulcanized inner rubber member of a tire has not yet been practiced.

If lines or the like can be placed on the surface of an inner member forming a laminate of rubber (an inner rubber member) in a tire, the correct position of the inner rubber member can be specified easily, and the inner rubber member can be placed more accurately along the central line of the laminate. This can improve the accuracy in the tire building. Moreover, rubber members could be identified easily from each other and the quality assurance in the manufacture of a tire can be enhanced. Therefore, a material used for a marking which is placed on the surface of an inner rubber member forming the laminate (it may be referred to as a material used for an inner marking) has been strongly demanded. However, such a material is a foreign material disposed between inner rubber members forming the laminate and it is difficult to reliably obtain sufficient resistance to cleavage between the inner rubber members forming the laminate. Therefore, the above marking has not been practically applied.

The present inventors have conducted various experiments to satisfy the above demand. As the material for an inner marking, (1) coloured pens and paints, (2) sticks of stearic acid and (3) coloured rubber cements were selected, and a number of experiments were conducted, and the following was found. In the case of (1), a separation took place at the interface between the rubber members and resistance to separation markedly decreased. In the case of (2), the marking lines and the characters showed poor adhesion to the rubber member and easily fell away. Moreover, the marking lines and the characters were not sufficiently conspicuous. In the case of (3), the inside of the layer of the rubber cement placed at the interface of the rubber members fractured which caused a deterioration in the resistance to separation. None of the experiments gave any satisfactory results.

Attention is also drawn to the disclosure of US-A-3101110.

The present invention aims to provide a rubber cement for marking which improves accuracy of the position of placement of rubber members in a process for manufacturing a rubber article such as a tire and a belt, and to provide an enhanced quality control of the rubber article and a rubber article marked with the rubber cement.

Among the above three methods, the method (3), which uses a coloured rubber cement, appeared to be the most promising. It was found unexpectedly that, by improving the tensile strength (Tb) and modulus of the elasticity (Mod) of the seed rubber of the rubber cement to be closer to those of the rubber members, which contact the rubber cement, as much as possible, the fracture at the inside of the layer of the rubber cement can be prevented. The present invention has been completed based on this unexpected knowledge.

The present invention uses a rubber cement for marking unvulcanized rubber, which comprises a seed rubber and a solvent. As the seed rubber, there is used a rubber composition comprising a rubber component comprising at least one rubber selected from natural rubber and diene synthetic rubbers, silica and titanium dioxide. The preferable amount of silica is 10 to 60 parts by weight per 100 parts by weight of the rubber component, and the preferable amount of titanium oxide is 5 to 30 parts by weight per 100 parts by weight of the rubber component.

More particularly, the present invention provides a rubber article which has an inner rubber member marked with the rubber cement having a bright colour for marking unvulcanized rubber as described above. Examples of the rubber article include tires, power belts and the like, which have a laminate of rubber. Pneumatic tires can be made according to the constructions disclosed in U.S. Patent Numbers 5,866,171; 5,876,527; 5,931,211; and 5,971,046.

In particular, the rubber cement is applied to lamination of tread materials, wherein the tire has an inner rubber member marked with the rubber cement preferably in an area having a width of about 20% or smaller of a width of a tread portion along a central line of a circumference of the tire. The cement can also be used to form other elastomeric tire components such as subtreads, black sidewalls, body ply skims and the like.

The present invention also provides a process for manufacturing a rubber article which comprises coating a surface of at least one intermediate rubber member, as a mark, with a rubber cement which comprises a solvent and a rubber composition comprising a rubber component comprising at least one rubber selected from natural rubber and diene rubbers, silica and titanium dioxide; laminating the intermediate rubber member with other rubber members in a manner such that the coated surface of the intermediate rubber member contacts the other rubber members; and forming and vulcanizing an obtained laminate.

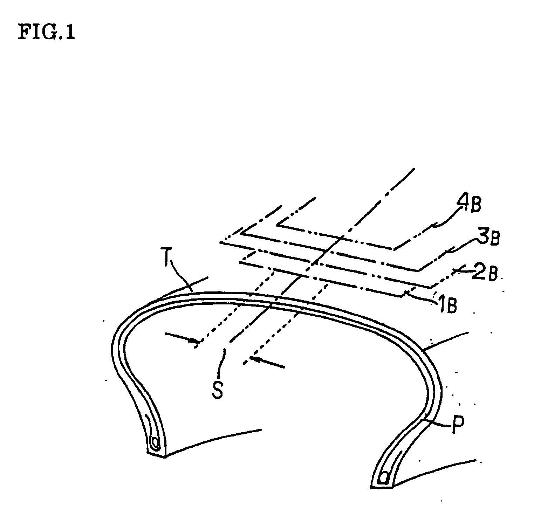

Reference is also made to the accompanying drawing, wherein Figure 1 shows a diagram, which illustrates an example of a preferable portion S for application of the rubber cement when a tire is selected as the rubber article. In Figure 1, 1B to 4B denote belts, P denotes a ply, S denotes the surface area to which the rubber cement for marking can be applied and T denotes a tread portion.

The rubber cement used in the present invention comprises a seed rubber composition comprising a rubber component and a filler, and a solvent.

In the seed rubber composition, the rubber component comprises a diene rubber which is similar to that in inner rubber members so that the properties (in particular, Tb and Mod) of the seed rubber of the rubber cement are improved to be close to those of the inner rubber members and the applied marks are distinctly observable. As the filler, silica is selected so that Tb and Mod are improved, and titanium dioxide is selected so that the whiteness of the applied rubber cement is enhanced and the mark is more distinctly observable. Of course, other ingredients generally used in formulations of rubber compositions such as white fillers, vulcanization accelerators, vulcanization acceleration activators, vulcanizing agents, antioxidants, silane coupling agents and colouring agents can be suitably selected and used.

The rubber cement can be prepared by dissolving the components for the rubber cement into a solvent in accordance with a conventional method. The concentration of the rubber cement is not particularly limited and is selected in accordance with the rubber article to which the rubber cement is applied. When the concentration is excessively low, marks made with the rubber cement are less distinctly observable. When the concentration is excessively high, the operation of application becomes difficult. Therefore, a suitable concentration should be selected.

Preferably the rubber composition comprises from about 10 to about 60 parts by weight of silica per 100 parts by weight of the rubber component. When the amount of silica is less than about 10 parts by weight, the reinforcement effect of silica may be insufficient. When the amount of silica exceeds about 60 parts by weight, the workability in mixing may deteriorate. Preferably the rubber composition comprises from about 5 to about 30 parts by weight of titanium dioxide per 100 parts by weight of the rubber component. When the amount of titanium dioxide is less than about 5 parts by weight, the whiteness may be insufficient. When the amount of titanium dioxide exceeds about 30 parts by weight, resistance to cleavage may deteriorate.

The rubber cement can be applied to various types of rubber articles. As the portion to which the rubber cement is applied, it is preferable that a portion having a smaller internal strain is selected. In the following, a tire is taken as an example of the rubber article and the marking during lamination of tread materials is described. Shearing strains and compressive strains are formed between inner components of the tire while loaded or during rotation of the tire. In general, a strain formed in the central portion of a belt are smaller than that formed at the end portion of the belt. Therefore, the central portion is more suitable for applying the rubber cement. Since the shearing strain increases when going farther from the central line in the axial direction of the tire, it is preferable that the rubber cement is applied in an area having a width of about 20% or smaller of the width of the tread portion along the central line of the circumference of the tire (the surface area S to which the rubber cement for marking can be applied, shown in Figure 1).

To summarize the advantages of the present invention, by the use of the above rubber cement, sufficient resistance to cleavage between inner rubber members forming a laminate can be exhibited since the tensile strength (Tb) and the modulus of elasticity (Mod) of the seed rubber composition of the rubber cement are increased so that the properties of the rubber cement layer can be made as close as possible to the properties of the rubber members which contact the rubber cement layer. A bright colour for the marking is also exhibited by the use of the above rubber cement. The correct positions of the inner rubber members can be easily and specifically decided by the use of the above rubber cement for marking purposes and rubber articles having more accurate structures can be obtained.

The present invention will be described more specifically with reference to the following examples.

The formulations used in Examples of the present invention and Comparative Examples are shown in Table 1. As the rubber article of the present invention, a tire is selected. The test of cleavage between a carcass ply P and a belt B in a crown portion of the carcass where the tread portion T is placed was conducted and the surface formed by the cleavage was observed. A marking character was placed with a rubber cement on a portion of 1 cm × 1 cm along the central line of the surface of a ply treat, and a tire having a size of 11R22.5 and a rib pattern was built and vulcanized. Then, the prepared tire was dissected. The cleavage test between the carcass ply P and the first belt B1 was conducted and the surface formed by the cleavage was observed. The results of the cleavage test and the observation are shown in Table 1.

### Example 1

A rubber cement comprising a rubber component, silica and titanium dioxide was used. The coated portion of the ply treat was remarkably white as expected. In the test of cleavage of the tire, the rubber cement was not exposed to the surface and the rubber surrounding the rubber cement was broken in the form of an aggregate fracture. The results showed that excellent adhesion was achieved. In the test of cleavage after an LR drum test for 40,000 km, the surface formed by the cleavage was observed and it was shown that the rubber surrounding the rubber cement was broken in the form of an aggregate fracture. The results are shown in Table 1. The LR (Long Run) drum test is for measurement of durability of a tire, which is measured by running a tire on a drum at a speed of 60 km/hour for a distance of 40000 km

### Comparative Examples 1 and 2

A rubber cement for marking lines on tread rubbers and a white side rubber used for passenger car tires (PSR), which were available in a tire production plant, were used as the rubber cement for marking. In the test of cleavage, fracture occurred within the rubber cement and the resistance to cleavage decreased markedly to about 1/4 of the ordinary value. The durability of the tire was also insufficient. The results are shown in Table 1.

### Comparative Example 3

A rubber cement containing silica but no titanium dioxide was used. Silica was used in an amount of 65 parts by weight per 100 parts by weight of the rubber component. Although an excellent result was obtained in the test of cleavage, the workability by a Banbury mixer was markedly poor. Moreover, since titanium dioxide was not contained, the whiteness of the mark was insufficient. Therefore, the rubber cement was not suitable as a cement for marking. The results are shown in Table 1.

**Table 1**

| Example Comparative Example | 1 | 1 | 2 | 3 |
|---|---|---|---|---|
| Formulation | | | | |
| RSS #3 ¹⁾ | 100 | 100 | 20 | 100 |
| CL-IIR ²⁾ | 0 | 0 | 50 | 0 |
| EPDM³⁾ | 0 | 0 | 30 | 0 |
| SiO₂ | 40 | 0 | 0 | 65 |
| CaCO₃ | 0 | 60 | 0 | 0 |
| TiO₂ | 10 | 40 | 40 | 0 |
| Clay | 0 | 0 | 20 | 0 |
| Talc | 0 | 0 | 30 | 0 |
| ZnO | 6 | 10 | 4 | 6 |
| Stearic acid | 2 | 2 | 2 | 2 |
| Ultramarine blue | 0 | 0 | 0.5 | 0 |
| Distinctness of formed mark ⁴⁾ | excellent | excellent | good | poor |

| Test of cleavage (Condition of surface formed by cleavage) | | | | |
|---|---|---|---|---|
| original tire | rubber cement not exposed, aggregate fracture of surrounding rubber | rubber cement exposed, fracture of rubber cement | rubber cement exposed, fracture of rubber cement | rubber cement not exposed, aggregate fracture of surrounding rubber |
| tire after driving for 40,000 km on a LR drum | the same as the above | the same as the above | the same as the above | the same as the above |

| | | | | |
|---|---|---|---|---|
| 1) Natural rubber | | | | |
| 2) Chlorinated butyl rubber | | | | |
| 3) Ethylene-propylene-diene terpolymer rubber | | | | |
| 4) excellent: remarkably distinct whiteness | | | | |
| good: distinct whiteness, though less than the above | | | | |
| poor: obscure whiteness | | | | |

Only Example 1, which has both silica and titanium dioxide in its formulation, provides a combination of acceptable properties for use as a rubber cement for marking a rubber article according to the present invention.

## Claims

1. A rubber article which has an inner rubber member marked with a rubber cement having a bright colour which comprises, as a seed rubber, a rubber composition comprising a rubber component comprising at least one rubber selected from natural rubber and diene rubbers, silica and titanium dioxide, and a solvent which can dissolve the seed rubber.

2. A rubber article as claimed in claim 1, wherein the rubber composition comprises 10 to 60 parts by weight of silica per 100 parts by weight of the rubber component.

3. A rubber article as claimed in claim 1 or 2, wherein the rubber composition comprises 5 to 30 parts by weight of titanium dioxide per 100 parts by weight of the rubber component.

4. A rubber article as claimed in any of claims 1 to 3, which is a tire.

5. A rubber article as claimed in claim 4, wherein the tire has an inner rubber member marked with the rubber cement in an area having a width of 20% or smaller of a width of a tread portion along a central line of a circumference of the tire.

6. A process for manufacturing a rubber article which comprises coating a surface of at least one intermediate rubber member, as a mark, with a rubber cement which comprises a solvent and a rubber composition comprising a rubber component comprising at least one rubber selected from natural rubber and diene rubbers, silica and titanium dioxide; laminating the intermediate rubber member with other rubber members in a manner such that the coated surface of the intermediate rubber member contacts the other rubber members; and forming and vulcanizing an obtained laminate.

## Patentansprüche

1. Gummiartikel, der ein inneres Kautschukelement aufweist, welches mit einer Kautschuklösung von einer leuchtenden Farbe markiert ist, wobei dieselbe als einen Samengummi (seed rubber) eine Kautschukzusammensetzung enthält, die eine Kautschukkomponente aufweist, welche ihrerseits mindestens einen Kautschuk umfasst, welcher ausgewählt wird unter einem natürlichen Kautschuk und Dien-Kautschuk, Siliziumdioxid und Titandioxid, sowie ein Lösungsmittel, das den Samengummi auflösen kann.

2. Gummiartikel gemäß Anspruch 1, bei welchem die Kautschukzusammensetzung 10 bis 60 Gewichtsteile Siliziumdioxid pro 100 Gewichtsteile der Kautschukkomponente enthält.

3. Gummiartikel gemäß den Ansprüchen 1 oder 2, bei welchem die Kautschukzusammensetzung 5 bis 30 Gewichtsteile Titandioxid pro 100 Gewichtsteile der Kautschukkomponente enthält.

4. Gummiartikel gemäß irgendeinem der Ansprüche 1 bis 3, welcher aus einem Reifen besteht.

5. Gummiartikel gemäß Anspruch 4, bei welchem der Reifen ein inneres Kautschukelement aufweist, welches mit der Kautschuklösung in einem Bereich markiert ist, welcher eine Breite von 20 % oder weniger in Bezug auf eine Breite eines Laufflächenabschnittes entlang einer zentralen Linie eines Umfangs des Reifens aufweist.

6. Verfahren zur Herstellung eines Gummiartikels, welches umfasst: ein Beschichten einer Oberfläche von mindestens einem zwischengelagerten Kautschukelement, in der Form einer Markierung, mit Hilfe einer Kautschuklösung, welche sich aus einem Lösungsmittel und einer Kautschukzusammensetzung zusammensetzt, die eine Kautschukkomponente aufweist, welche ihrerseits mindestens einen Kautschuk umfasst, welcher ausgewählt wird unter einem natürlichen Kautschuk und Dien-Kautschuk, Siliziumdioxid und Titandioxid; ein Laminieren des zwischengelagerten Kautschukelementes mit anderen Kautschukelementen auf solch eine Art und Weise, dass die beschichtete Oberfläche des zwischengelagerten Kautschukelementes die anderen Kautschukelemente berührt; und ein Formen und ein Vulkanisieren eines erhaltenen Laminats.

## Revendications

1. Article de caoutchouc qui possède un élément de caoutchouc intérieur marqué avec une dissolution de caoutchouc possédant une couleur lumineuse qui comprend, comme caoutchouc en graine, une composition de caoutchouc comprenant un composant de caoutchouc comprenant au moins un caoutchouc sélectionné parmi le caoutchouc naturel et les caoutchoucs diéniques, la silice et le dioxyde de titane, et un solvant qui peut dissoudre le caoutchouc de départ.

2. Article de caoutchouc comme revendiqué dans la revendication 1, dans lequel la composition de caoutchouc comprend 10 à 60 parties en poids de silice pour 100 parties en poids du composant de caoutchouc.

3. Article de caoutchouc comme revendiqué dans la revendication 1 ou 2, dans lequel la composition de caoutchouc comprend 5 à 30 parties en poids de dioxyde de titane pour 100 parties en poids du composant de caoutchouc.

4. Article de caoutchouc comme revendiqué dans une quelconque des revendications 1 à 3, qui est un pneumatique.

5. Article de caoutchouc comme revendiqué dans la revendication 4, dans lequel le pneumatique possède un élément de caoutchouc intérieur marqué avec la dissolution de caoutchouc dans une zone possédant une largeur inférieure ou égale à 20% d'une largeur d'une partie de bande de roulement le long d'une ligne centrale de la circonférence du pneumatique.

6. Procédé de fabrication d'un article de caoutchouc qui consiste à revêtir la surface d'au moins un élément de caoutchouc intermédiaire, sous forme d'une marque, avec une dissolution de caoutchouc qui comprend un solvant et une composition de caoutchouc comprenant un composant de caoutchouc comprenant au moins un caoutchouc sélectionné parmi le caoutchouc naturel et les caoutchoucs diéniques, la silice et le dioxyde de titane; à stratifier l'élément de caoutchouc intermédiaire avec d'autres éléments de caoutchouc d'une manière telle que la surface revêtue de l'élément de caoutchouc intermédiaire soit en contact avec les autres éléments de caoutchouc; et à former et à vulcaniser le stratifié obtenu.
